# EUROPEAN PATENT APPLICATION

(11) **EP 3 499 025 A1**
(43) Date of publication of application: **19.06.2019**
(21) Application number: 18212785.2
(22) Date of filing: 14.12.2018
(51) Int. Cl.: F03D 13/25, F03D 13/10, E04G 21/28, E04G 21/24

(54) **OFFSHORE WIND TURBINES**

(30) Priority: 15.12.2017 GB 201720974
(71) Applicant: Drillx Holdings Limited, Ryde, Isle of Wight PO33 2LN (GB)
(72) Inventor: MURRAY, Ian, Ryde, Isle of Wight PO33 2LN (GB); McLEAN, Jonathon, Ryde, Isle of Wight PO33 2LN (GB)
(74) Representative: MacLean, Martin David

(57) **Abstract**

A temporary cover 20, 120 for a wind turbine transition piece (TP) aperture comprises a rigid, prefabricated assembly which, when assembled, is in the general form of a shallow cylindrical or frusto-conical drum adapted to fit around the circumferential edge of the TP aperture and comprises a substantially planar top lid and a substantially vertical rim, wherein the rim and the lid are formed in discrete sections 22, 24, 122a-c adapted to be fitted together in situ on the transition piece.

## Description

### FIELD OF THE INVENTION

The present invention relates to offshore wind turbines, and in particular to apparatus for providing weather protection for a turbine during installation.

### BACKGROUND ART

Offshore wind turbines usually consist of a vertical mast which carries at its top a rotatable turbine housing holding the axle to which the turbine blades are mounted and the electrical generating apparatus. The lower end of the vertical mast is fixed to the sea bed, normally to a foundation such as a concrete foundation block planted on or fixed to the sea bed. Offshore wind turbines are often designed to rise tens or even hundreds of metres above the surface of the sea, and of course the mast must exceed this in length - so as to extend to the foundation at the sea bed, for example; accordingly many offshore turbines have masts which are designed in two parts with one part of the mast, known as a "transition piece" (TP), designed to extend from the seabed foundation to a point about ten metres above sea level. The TP is installed on its foundation in one operation, and the upper part of the mast is mounted to the TP and the turbine housing, turbine blades, etc. are installed in subsequent operations. In offshore wind "farms", numbers of TPs are first installed in position by a crane carried on a dedicated TP installation vessel, and a dedicated turbine assembly vessel with the necessary installation cranes and other equipment carries out the subsequent turbine installation operations on successive TPs. In some locations, particularly where the sea depth is substantial, the TP is a floating design, arranged to float with its base at a specific depth below the surface, rather than the base being anchored to the sea bed.

TPs are usually hollow cylindrical steel structures of about 5-10m diameter and are provided with internal floors for holding machinery, electrical equipment and/or stores, with an internal ladder or stairway allowing operators to access the bottom of the mast where it is mounted to the foundation. The electrical power generated by the turbine in use is usually conducted away by cabling exiting at the base of the TP, either through the TP or through the foundation. The TPs are of variable length, according to the depth of the sea at the installation location or the depth at which the base of the TP floats, but are usually designed to rise about 10m above the sea surface. At their upper level, there is an aperture, usually circular and about the same diameter as that of the cylinder, which has multiple circumferential holes for the bolts which hold the upper section of the mast to the TP; otherwise, this aperture is open so as to allow a bottom portion of the upper mast section to fit within, in a post/socket-type arrangement. Around the opening is an annular flat deck around which operators can move when installing the turbine, and which allows operators to access the installed turbine (through a hatch or door in the side of the upper part of the mast) for maintenance, etc. The deck usually extends no more than a metre outwardly from the cylindrical wall of the TP, and has an outermost guard railing or handrail to protect workers using the deck.

Although the deck and the open aperture are designed to be well above sea level, in stormy weather waves become sufficiently high or fierce that sea water can spill into the opening, and of course rain can enter the TP through the aperture. This is undesirable, because such water tends to gather inside the TP at its base, and this has to be pumped out to prevent corrosion of the TP, and/or damage to equipment or stores inside the TP and/or to the electrical cabling at the base of the TP. Accordingly it is necessary to provide some kind of cover for this open aperture whilst the TP is installed but the upper part of the turbine mast is yet to be mounted to it, which may be several weeks or more. Because of the limited amount of space available on the deck, the conventional cover is made as a kind of "tent", having a supporting framework with a flexible, waterproof outer covering which is secured to the framework and to the outer part of the aperture.

Although such tent structures are readily assembled by hand and without need of a crane or other lifting equipment (the provision of a crane for this purpose would involve significant time and additional expense), they have several disadvantages. The erection of any structure on top of the TP, even a reasonably lightweight tent structure, is not easy given the turbine is intentionally installed at a windy location - whilst the framework can usually be assembled easily, winds can catch the fabric cover whilst it is being erected, meaning that several workers are needed to secure it in place. The fabric or other material of the covering is not strong enough to support any significant weight, such as an operator or other equipment, so this must all fit on the limited amount of deck space around the aperture - which then reduces the room available for erecting or taking down the tent. If an operator or some equipment were to fall onto the tent, the material can stretch, and it can stretch in use, leading to a less than weatherproof fit, and it is easily torn or damaged. It is not usually feasible to repair a damaged tent cover *in situ,* so replacement covers need to be carried on the installation vessel, or stored within the TP, which takes up valuable space. When the tent is in place there may be need for operators to gain access inside the TP, and this necessitates undoing the tent which can lead to wear of the tent, or there has to be an opening in it which provides a weak point for the ingress of water. And it is the case that even the strongest tent structure can be blown away or destroyed in the event of truly severe weather. Finally, tent covers are liable to allow condensation to form on the inside of the tent; this is undesirable, as it can promote the growth of mould which can be injurious to the health of operators working within the TP, and can compromise the long term strength of the tent material

### SUMMARY OF THE INVENTION

The present invention provides a temporary cover for a wind turbine transition piece (TP) aperture, the cover comprising a rigid, prefabricated assembly which, when assembled, is in the general form of a shallow cylindrical or shallow frusto-conical drum adapted to fit over the circumferential edge of the TP aperture and comprising a substantially planar upper lid above a substantially vertical circumferential rim, wherein the rim and the lid are formed in discrete sections adapted to be releasably fitted together *in situ* on the transition piece to form the cover.

With such an arrangement the sections may be made sufficiently light in weight (no more than 25kg) that they are easily carried and assembled by a single operator and do not require a crane (which is a significant advantage); they can also be made sufficiently small that they can be moved around during assembly/installation despite strong winds. Small sections are more easily stored and handled, and, in the event of any section being damaged it is not necessary to replace a significant part of, or the whole of, the cover, but only the damaged section(s), which saves manpower, time and material. Because the sections are made of a rigid material, when they are assembled they create a strong and durable structure, which can withstand adverse weather far better than any tent cover, and they can be made more consistently weatherproof than a tent cover. The lower edge of the rim can be provided with fixtures which match those provided around the edge of the TP aperture, so that the temporary cover can be very securely mounted to the TP and are not liable to be blown away, even in hurricane strength conditions. Accordingly covers in accordance with the invention substantially eliminate the need for operators to visit the TP to repair or replace the covers. The resistance of the covers to wind damage can be improved if the rim of the drum is not vertical but instead inclined at a cone angle, to form a shallow, frusto-conical shaped drum. Accordingly the rim of the drum could be at least 45° to the horizontal, and is preferably at about 60° to about 80° to the horizontal; such dimensions, combined with the shallow shape, simultaneously increases resistance to wind damage whilst adding to the structural strength of the cover so that it is capable of holding greater loads and maximises the area on the top of the cover on which operators can walk or on which items can be stored. The terms "vertical" and "vertically" when used herein in relation to the rim of the cover should be construed accordingly.

The rim is preferably of similar height as the handrail surrounding the TP deck; this allows the lid to be used easily for hoisting stores or personnel onto and off the TP by helicopter. The upper surface of the lid sections are preferably provided with a non-slip coating to provide secure footing for operators walking on the lid, and a lightweight safety handrail may be provided which mounts releasably around the perimeter of the lid. The shallowness of the drum (by which we mean no less than about 15% height to diameter ratio and no more than about 30% height to diameter ratio, and preferably between 17% and 25%) is important because a cover which is low and wide improves the resistance of the cover against wind damage, whilst making it relatively easy for an operator to climb atop the cover when necessary.

As mentioned above, covers in accordance with the invention are structurally much stronger than conventional tent covers; operators can safely walk on the lid and stores can be placed on the lid, and the lid could be provided with fixtures for demountably fixing a hoist or small crane, for moving stores and the like around the deck, and/or into the TP through a hatch in the lid. The provision of a cover which can be walked on or support equipment significantly increases the area of usable deck on the TP.

Advantageously the sections forming the lid are shaped as sectors of a circle (a "sector" being the part of a circle enclosed by two radii of a circle and their intercepted arc, like a piece of pie); it is easy to recognise how such sections are to be connected together to form a round lid (along their longitudinal radial edges). These sectors can be of equal angle, so that they are readily interchangeable, or they can have different angles so that the sectors can be assembled in a particular manner, to locate particular sectors in desired positions. The combined angles of the sectors may be such that, when the lid is assembled, the centre of the lid is vertically displaced above the circumference of the lid; this provides a conical surface so that rain drains off the cover, and the conical surface of the assembled lid is preferably at a small angle to the horizontal (between about 5° and 15°) so that it can still be walked on (the term "planar" used herein should be interpreted as encompassing shallow conical lids as well as lids which are truly planar in form).

The edges of the sections can be adapted to be releasably fixed to the edges of sections which are contiguous when assembled; this could be by providing flanges along the edges of the sections, so that adjacent sections can be bolted together, and the lid can be bolted to the rim, in the same way as the lower edges of the rim can be bolted to the circumferential holes around the TP aperture to secure the cover in place.

The longitudinal edges of the lid sections and/or the edges of the rim sections which in use are vertical could be provided with either longitudinal projections or matching longitudinal grooves, whereby adjacent edges of two sections can be joined together in "tongue and groove" fashion. This allows the rim sections to be slotted together before these are bolted to the holes around the TP aperture, and the lid sections to be slid into a complete assembly before this is bolted or otherwise secured to the rim.

One of the sections forming the vertical rim may comprise a hinged door or hatch, to allow access inside the TP when the cover is fitted. One of the sections forming the lid may comprise an opening with a sliding hatch thereover, which allows items to be lowered into and lifted out of the TP (fixtures may be provided around the hatch opening for mounting a suitable hoist over the hatch opening for this purpose). If the sliding hatch is located in alignment with the hinged door, this increases the size of the access opening so that even large or awkward items (such as a casualty on a stretcher) can be manoeuvred into or out of the TP.

One of the sections forming the lid can be provided with an opening for mounting a unit for ventilating under the assembled cover, which helps prevent condensation. There can be a wind powered air pump to extract fumes from the TP, and there could also be a small power generator to charge batteries on board the TP. Because the lid is formed of a rigid material, a unit which allows ventilation but which prevents the ingress of water can be mounted to the lid, whereas a tent cover would not be sufficiently strong to allow fitting of a suitable unit. Condensation can also be restricted by forming the lid and/or rim sections of a thermally insulating material, such as a layered composite material (for example a sandwich of carbon fibre reinforced plastic and foamed plastic about 45mm thick). The ventilation opening is preferably located, when the lid is assembled, as far away as possible from (such as diametrically opposite) the hinged door/sliding hatch, so as to maximise ventilation when the door/hatch is/are open and so as to avoid compromising the structural strength of the cover too much.

The sections are preferably adapted to float, as a result of the materials of which they are formed, or as a result of incorporating buoyancy elements, or both. This is an advantage in that any section which falls from the deck during installation or disassembly can be recovered for re-use; in addition, the sections could be sufficiently buoyant to act as *ad hoc* buoyancy aids in the event of a disaster.

### BRIEF DESCRIPTION OF THE DRAWINGS

The invention will now be described by way of example and with reference to the accompanying figures, in which;
Figure 1 is a schematic side view of a typical transition piece;
Figure 2 is a schematic perspective view of a temporary cover for a TP in accordance with the invention;
Figure 3 is a schematic perspective view of a part of a circumferential rim forming part of the cover of Figure 2;
Figure 4 is a plan view of a part of a lid forming part of the cover of Figure 2, and
Figure 5a is a perspective view and Figure 5b a plan view of another embodiment of a temporary cover for a TP in accordance with the invention.

### DETAILED DESCRIPTION OF THE EMBODIMENTS

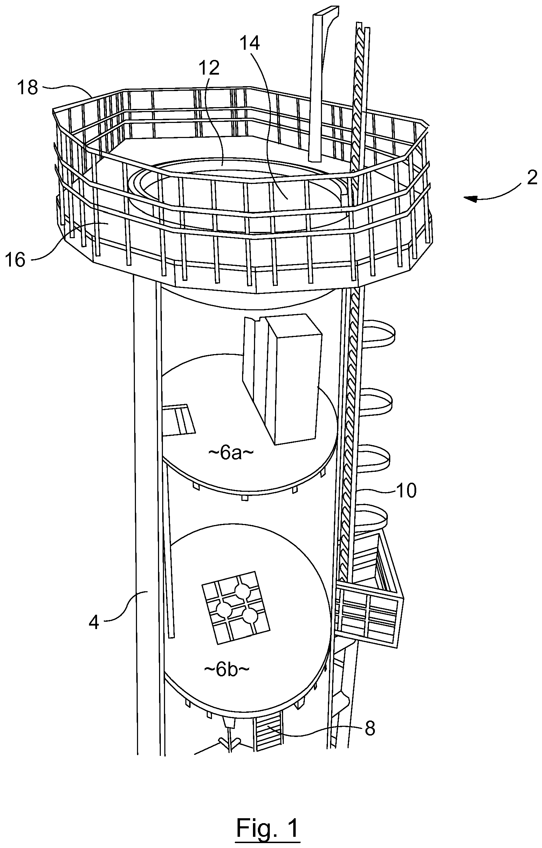

Figure 1 shows a conventional transition piece (TP) 2 in partial cross-section; it consists of a substantial cylindrical shaft piece 4 which when installed is vertical and extends from a foundation on the sea bed (not shown) or from a floating position (not shown) to above the surface of the sea. The shaft 4 is hollow, and provided with several internal floors 6a, 6b for placing equipment, stores and the like, and with internal ladders 8 for moving between floors and from the top of the TP to the base. An external ladder is provided so as to allow operators to climb up the outside of the TP to the top, where there is a circular aperture 12 surrounding an opening 14. The external ladder allows access to a deck 16 which surrounds the aperture 12, and there is a safety handrail 18 around the outer edge of the deck 16.

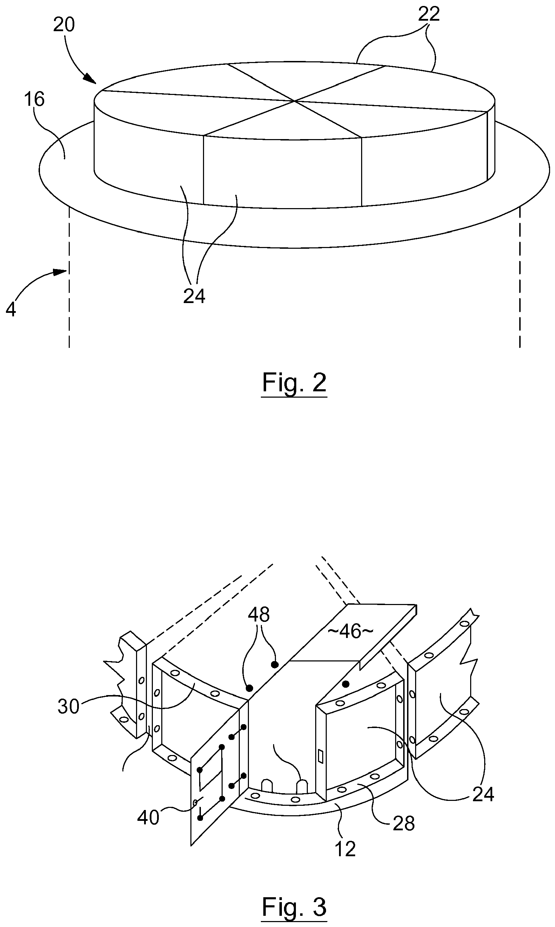

Figure 2 illustrates a cover 20 in accordance with the invention, which is drum-shaped and about 1-1.5m in height and about 6m in diameter (the same as the diameter of the aperture 12), with the drum being formed of a number of pie-shaped lid sections 22, which when assembled form a circular lid, and a circumferential rim formed of individual rim sections 24. The lid sections 22 are bolted or otherwise releasably fixed together along their adjacent longitudinal edges, and the assembled lid is then bolted to the rim. There are equal numbers of lid sections and of rim sections, so that they can be assembled with aligned seams as shown in Figure 2; this allows sealant material to be sandwiched between joins which extend from the centre of the lid to the edge of the aperture.

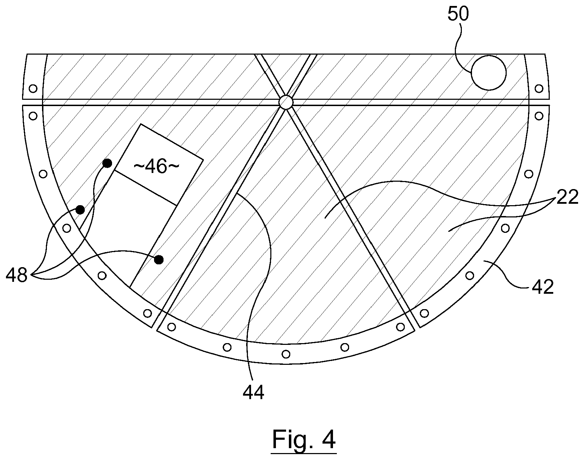

Figure 3 shows the rim sections 24 which have circumferential flanges allowing adjacent sections 24 to be bolted together along their adjacent vertical edge flanges 26, to be bolted to the TP aperture 12 along the lower edge flanges 28, and to be bolted to the circumferential edge 42 of the lid (see Figure 4) along their upper edge flanges 30. One edge section comprises a hinged door 40 allowing access inside the TP. The lid is shown more clearly in Figure 4; its sections are releasably joined together along adjacent longitudinal edges 44. There is a sliding hatch 46, which is aligned with the door 40 to maximise the size of the opening, and around the hatch opening are sockets 48 which allow the fitting of a tripod hoist to lift equipment, etc., into and out of the TP. On the sector opposite the sector having the sliding hatch 46 is an opening 50 for fitting a wind operated ventilation and/or power generating unit, such as a vertical pillar turbine unit, for ventilating inside the TP (and removing fumes from inside the TP) or for charging batteries inside the TP.

The sections are typically about 25kg in weight, and so can be lifted and manoeuvred by one worker; in practice, a cover as described requires only two workers to assemble or take down, which is the same as is needed with a tent cover, but the same two people are required to repair or replace a tent cover. With a cover in accordance with the invention, not only is it less prone to damage or to require repair, but it should only require one person to repair the cover, i.e. to replace a section, as the remainder of the cover is self-supporting unlike a tent cover.

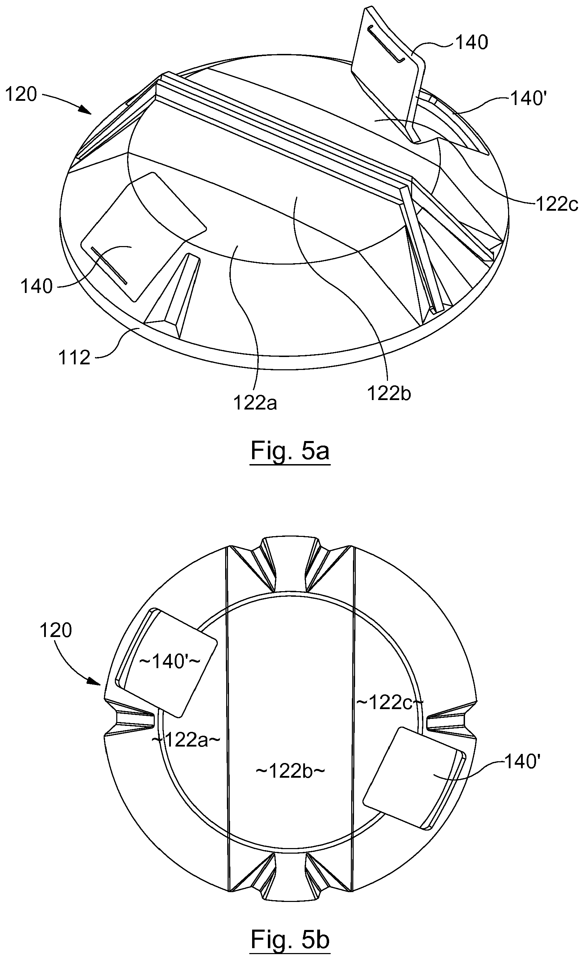

Figures 5a and 5b show another cover 20 in accordance with the invention, in which the cover is formed of 3 discrete elongate pieces 122a, 122b and 122c joined together along their adjacent elongate edges. Each piece comprises both a lid portion and a rim portion and are shown as unitary items but could equally be separate lid and rim pieces. The two outer sections 122a and 122c, when seen in plan view, are shaped as segments of a circle (a segment of a circle is the region bounded by a chord and the arc subtended by the chord) and the third section 122b is plank-shaped, so as to fit together along its elongate edges between the two segments to form a substantially circular lid; the pieces have sides which are at an angle of about 45° to the horizontal so that the shape of the cover 120 is frusto-conical, and shallow (with a vertical height of 1- 1.5m and a maximum diameter of about 6m. There are top-hinged hatches 140 which serve to seal apertures 140' in each of the outer segments 122a, 122c. The inclined rim can be shaped so as to accommodate items such as the legs of the lifting gantry shown in Figure 5a whilst not compromising the weather shielding provided by the cover 120.

It will of course be understood that many variations may be made to the above-described embodiment without departing from the scope of the present invention. For example, the invention has been described in terms of the lid being formed in six pie shaped sections or in three elongate pieces; there could be more or fewer pie sections or elongate sections, and/or the cover could be formed of a combination of elongate pieces and pie sections, which all fit together to form a substantially circular lid. The sections may be formed of aluminium or aluminium alloy instead of composite material, and their abutting edges can be fitted so as to not be in alignment, which could benefit the structural strength of the assembled cover. The sections which are provided with a hatch, door or ventilation opening may be of different size to the other sections, and the angles of lid sectors can be different.

Where different variations or alternative arrangements are described above, it should be understood that embodiments of the invention may incorporate such variations and/or alternatives in any suitable combination.

## Claims

1. A cover for a wind turbine transition piece (TP) aperture comprising a rigid, prefabricated assembly which, when assembled, is in the general form of a shallow drum adapted to fit around the circumferential edge of the TP aperture and comprising a substantially planar top lid and a substantially vertical rim, wherein the rim and the lid are formed in discrete sections adapted to be fitted together in situ on the transition piece.

2. A cover according to Claim 1, wherein the sections forming the lid are shaped as sectors of a circle,

3. A cover according to Claim 2, wherein the sectors are of equal angle.

4. A cover according to Claim 2 or Claim 3, wherein the combined angles of the sectors are such that, when the lid is assembled, the centre of the lid is vertically displaced above the circumference of the lid.

5. A cover according to any preceding claim, wherein the edges of the sections are adapted to be releasably fixed to the edges of sections which are contiguous when assembled.

6. A cover according to Claim 5, wherein the edges have either longitudinal projections or matching longitudinal grooves, whereby adjacent edges of two sections can be joined together.

7. A cover according to any preceding claim, wherein one of the sections forming the vertical rim comprises a hinged door.

8. A cover according to any preceding claim, wherein one of the sections forming the lid comprises an opening with a sliding hatch thereover.

9. A cover according to Claim 8 when dependent on Claim 7, wherein when assembled the sliding hatch is aligned closely to the hinged door.

10. A cover according to Claim 8 or Claim 9, wherein the section with the sliding hatch is provided with mounting fixtures around the hatch for mounting a hoist over the opening.

11. A cover according any preceding claim wherein one section forming the lid is provided with an opening for mounting a unit for ventilating under the assembled cover.

12. A cover according to Claim 11 in which there is a sections of the lid with an opening with a sliding hatch thereover, wherein when assembled the section with the ventilating opening is aligned as far away as possible from the section with the sliding hatch.

13. A cover according to any preceding claim wherein the sections are adapted so as to be buoyant in water.

14. A cover according to any preceding claim wherein the sections comprise shaped panels formed of layered composite materials.
